(19) Europäisches Patentamt
European Patent Office
Office européen des brevets

(11) **EP 4 679 521 A1**

(12) **EUROPEAN PATENT APPLICATION**

(43) Date of publication:
**14.01.2026 Bulletin 2026/03**

(21) Application number: **25179597.7**

(22) Date of filing: **28.05.2025**

(51) International Patent Classification (IPC):
**H01M 4/134** (2010.01)   **H01M 4/36** (2006.01)
**H01M 4/38** (2006.01)   **H01M 4/62** (2006.01)
**H01M 4/02** (2006.01)

(52) Cooperative Patent Classification (CPC):
**H01M 4/366; H01M 4/134; H01M 4/364; H01M 4/386; H01M 4/625;** H01M 2004/021; H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.07.2024 KR 20240091722**

(71) Applicant: **SK On Co., Ltd.**
**Seoul 03161 (KR)**

(72) Inventors:
• **KIM, Hyo Mi**
  **Daejeon 34124 (KR)**
• **JANG, Hwan Ho**
  **Daejeon 34124 (KR)**
• **KWON, Seong Cho**
  **Daejeon 34124 (KR)**
• **KIM, Moon Sung**
  **Daejeon 34124 (KR)**
• **RYU, Sang Baek**
  **34124 Daejeon (KR)**
• **PARK, Da Hye**
  **Daejeon 34124 (KR)**
• **PARK, Sang Won**
  **Daejeon 34124 (KR)**
• **BANG, Sang In**
  **Daejeon 34124 (KR)**
• **YOOK, Seung Hyun**
  **Daejeon 34124 (KR)**
• **CHUNG, Da Bin**
  **Daejeon 34124 (KR)**
• **HAN, Jun Hee**
  **Daejeon 34124 (KR)**

(74) Representative: **Stolmár & Partner**
**Patentanwälte PartG mbB**
**Blumenstraße 17**
**80331 München (DE)**

(54) **ANODE FOR LITHIUM SECONDARY BATTERY AND LITHIUM SECONDARY BATTERY INCLUDING THE SAME**

(57)   Provided is an anode for a lithium secondary battery of the present disclosure, comprising: an anode current collector; a first anode mixture layer formed on at least one surface of the anode current collector and including a first silicon-based active material doped with a first metal and a first conductive material; and a second anode mixture layer formed on the first anode mixture layer and including a second silicon-based active material doped with a second metal and a second conductive material, and the first conductive material has a Raman R value according to the following formula 1 that is greater than that of the second conductive material.

[Formula 1]

$$\text{Raman } R = I_D/I_G$$

(In formula 1, $I_D$ is a Raman peak intensity value in an absorption region of 1330 to 1380 cm$^{-1}$, and $I_G$ is a Raman peak intensity value in an absorption region of 1550 to 1625 cm$^{-1}$.)

FIG. 1

## Description

### TECHNICAL FIELD

The present disclosure relates to an anode for a lithium secondary battery and a lithium secondary battery including the same.

### BACKGROUND

Recently, research into electric vehicles (EV) that may replace fossil fuel vehicles such as gasoline and diesel-powered vehicles, which are one of the main causes of air pollution, has been conducted, and lithium secondary batteries with a high discharge voltage and output stability are mainly used as the power source of these electric vehicles (EV). Accordingly, the need for lithium secondary batteries with high energy density has increased, and development and research of high-capacity anodes for these batteries have also been actively conducted.

In order to implement high-capacity and high-energy density secondary batteries, development has been actively conducted on applying silicon-based active materials having higher discharge capacity than that of graphite to an anode for a secondary battery. When silicon-based active materials having relatively high discharge capacity are applied as active materials for the anode for a secondary battery, the loading weight (LW) of an anode active material layer may also be reduced, thereby further increasing the energy density.

However, when applying silicon-based active materials, (1) a resistance increase due to side reactions with the electrolyte, (2) internal short circuit or an active material crack phenomenon due to relatively large volume contraction/expansion rate during charging/discharging may occur, making it difficult to secure excellent lifespan characteristics, or excellent rapid charging performance, and the like, of an anode including silicon-based active materials. Accordingly, development of an anode for a secondary battery having excellent capacity characteristics, excellent lifespan characteristics, and excellent rapid charging characteristics is required.

### SUMMARY

An aspect of an embodiment is to provide an anode for a secondary battery that may reduce the volume expansion/contraction of a silicon-based active material during battery charging/discharging, thereby alleviating the occurrence of an active material cracking phenomena.

An object of another embodiment is to provide an anode for a secondary battery that may alleviate an increase in resistance.

An object of yet another embodiment is to provide an anode for a secondary battery having excellent lifespan characteristics, excellent rapid charging characteristics, and excellent capacity characteristics in both room temperature and high temperature environments.

According to an aspect of the present disclosure, provided is an anode for a lithium secondary battery including: an anode current collector; a first anode mixture layer formed on at least one surface of the anode current collector and including a first silicon-based active material doped with a first metal and a first conductive material; and a second anode mixture layer formed on the first anode mixture layer and including a second silicon-based active material doped with a second metal and a second conductive material, and the first conductive material may have a Raman R value according to the following formula 1 that is greater than that of the second conductive material.

$$[\text{Formula 1}]$$
$$\text{Raman } R = I_D/I_G$$

In formula 1, $I_D$ is a Raman peak intensity value in an absorption region of 1330 to 1380 cm$^{-1}$, and $I_G$ is a Raman peak intensity value in an absorption region of 1550 to 1625 cm$^{-1}$.

Each of the first and second metals may be independently at least one metal selected from lithium (Li), magnesium (Mg), calcium (Ca), iron (Fe), titanium (Ti), vanadium (V), and aluminum (Al).

A content of the first metal doped into the first silicon-based active material based on a total weight of the first silicon-based active material may be less than a content of the second metal doped into the second silicon-based active material based on a total weight of the second silicon-based active material.

The content of the first metal doped into the first silicon-based active material may be 1 to 5 wt% based on the total weight of the first silicon-based active material.

The content of the second metal doped into the second silicon-based active material may be 7 to 15 wt% based on the total weight of the second silicon-based active material.

A content of the first metal doped into the first silicon-based active material based on a total weight of the first anode mixture layer may be less than a content of the second metal doped into the second silicon-based active material based on a total weight of the second anode mixture layer.

The content of the first metal doped into the first silicon-based active material may be 0.04 to 0.5 wt% based on the total weight of the first anode mixture layer.

The content of the second metal doped into the second silicon-based active material may be 1 to 3 wt% based on the total weight of the second anode mixture layer.

A content of the first silicon-based active material in the first anode mixture layer may be less than a content of the second silicon-based active material in the second anode mixture layer.

The content of the first silicon-based active material in the first anode mixture layer may be 0.1 to 5 wt%.

The content of the second silicon-based active material in the second anode mixture layer may be 6 to 30 wt%.

The Raman R value of the first conductive material may be 0.11 to 1.5.

The Raman R value of the second conductive material may be 0.001 to 0.1.

The second conductive material may include a CNT-based conductive material.

The first conductive material may include one selected from a graphite-based conductive material, multi-walled carbon nanotubes (MWCNT), and combinations thereof.

The second conductive material may include one selected from single-walled carbon nanotubes (SWCNT), thin-walled carbon nanotubes (TWCNT), and combinations thereof.

A content of the first conductive material in the first anode mixture layer is greater than a content of the second conductive material in the second anode mixture layer.

According to another aspect of the present disclosure, provided is an anode for a lithium secondary battery including: an anode current collector; a first anode mixture layer formed on at least one surface of the anode current collector and including a first silicon-based active material doped with a first metal and a first conductive agent; and a second anode mixture layer formed on the first anode mixture layer and including a second silicon-based active material doped with a second metal and a second conductive agent, and a Raman spectrum obtained from a surface of the second anode mixture layer may exhibit a Radial Breathing Mode (RBM) peak.

The Raman spectrum obtained from the surface of the second anode mixture layer may exhibit G-band splitting.

According to yet another aspect of the present disclosure, provided is a lithium secondary battery comprising the anode described above.

An anode according to an embodiment of the present disclosure may alleviate the effects of volume expansion and contraction of a silicon-based active material during charging/discharging.

An anode according to another embodiment of the present disclosure may alleviate the increase in resistance.

An anode according to another embodiment of the present disclosure may have excellent high-temperature lifespan characteristics and rapid charging characteristics.

An anode according to yet another embodiment of the present disclosure may relatively reduce electrolyte consumption and improve capacity characteristics.

An anode of the present disclosure may be widely applied to electric vehicles, battery charging stations, and devices in green technology fields such as solar power generation and wind power generation using other batteries. Additionally, an anode of the present disclosure may be used in eco-friendly electric vehicles, hybrid vehicles, and the like, to prevent climate change by suppressing air pollution and greenhouse gas emissions.

## BRIEF DESCRIPTION OF DRAWINGS

Certain aspects, features, and advantages of the present disclosure are illustrated by the following detailed description with reference to the accompanying drawings.

FIG. 1 is a schematic cross-sectional view illustrating a structure of an anode for a lithium secondary battery according to an embodiment.

FIG. 2A is a view illustrating the results of Raman spectroscopy analysis for a first conductive material included in an anode for a secondary battery according to an embodiment, and FIG. 2B is a view illustrating the results of Raman spectroscopy analysis for a second conductive material included in an anode for a secondary battery according to the embodiment.

FIG. 3 is a view illustrating the results of Raman spectroscopy analysis for an anode for a lithium secondary battery according to Reference Example 1.

FIG. 4A is a view illustrating the results of Raman spectroscopy analysis for an anode for a lithium secondary battery according to Reference Example 2.

FIG. 4B is an enlarged view of a G-band portion in FIG. 4A.

FIG. 4C is an enlarged view of a RBM peak portion in FIG. 4A.

**DETAILED DESCRIPTION**

Hereinafter, various embodiments according to the present disclosure will be described in more detail with reference to the drawings. However, the following embodiments may be modified in various other forms, and the scope thereof is not limited to the embodiments described below.

An anode for a lithium secondary battery may use a silicon-based active material as an anode active material for high capacity characteristics, but the silicon-based active material (1) has increased resistance due to a side reaction with an electrolyte, and (2) has relatively large volume contraction/expansion characteristics during charging/discharging. Accordingly, when applying the silicon-based active material as the anode active material, an anode design that may alleviate the occurrence of the problems of increased resistance or volume contraction/expansion is required.

When the characteristics of the silicon-based active material, conductive material, and the like, are applied differently for each layer in consideration of the characteristics required in an upper layer and a lower layer in a multilayer structured anode including a silicon-based active material, an anode for a high-energy density secondary battery having improved lifespan characteristics by reducing the volume expansion and contraction of an anode including the silicon-based active material and also having improve capacity characteristics may be provided.

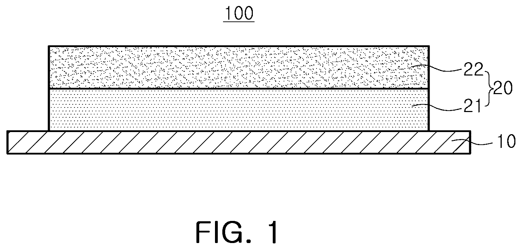

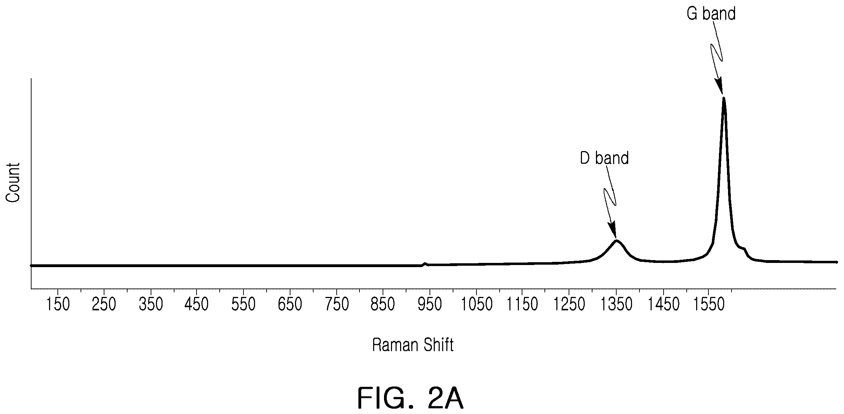

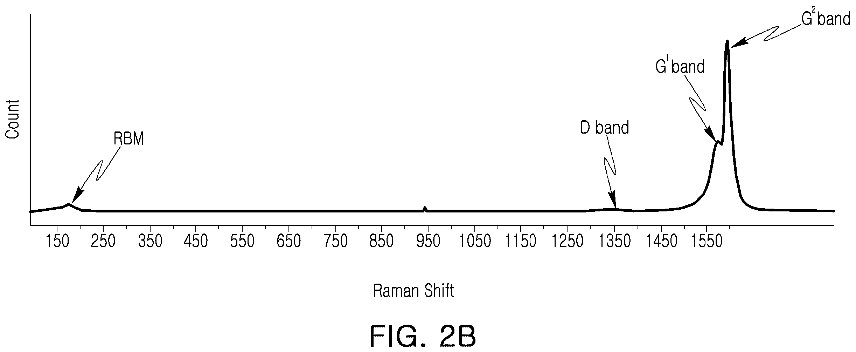

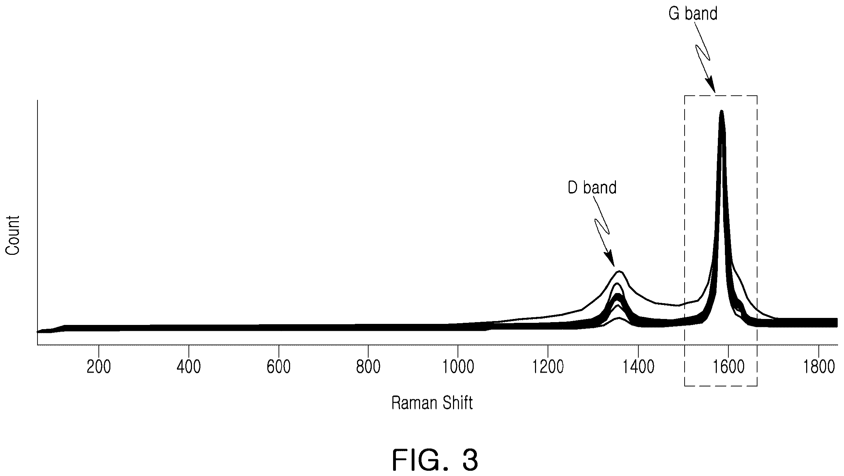

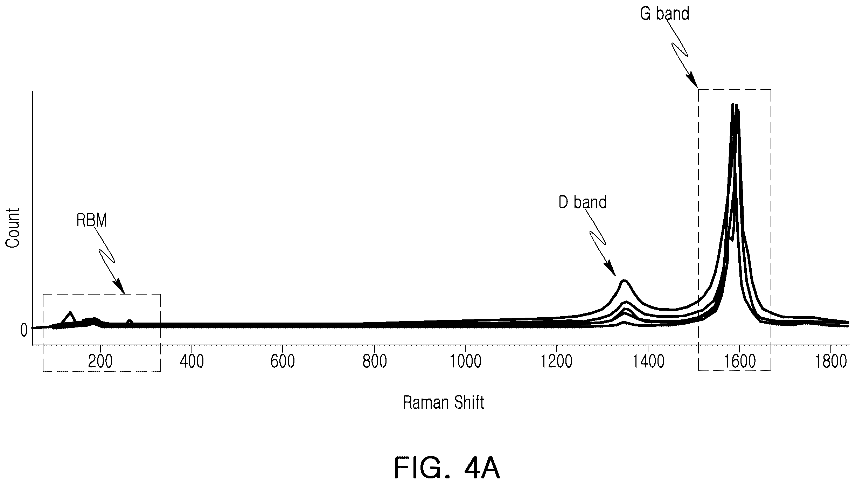

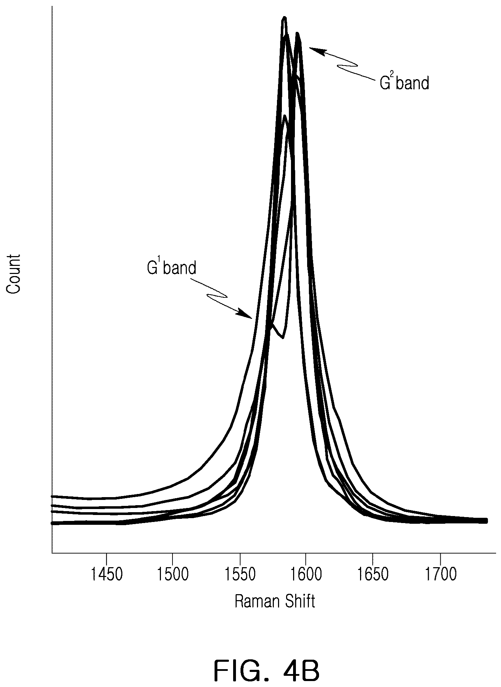

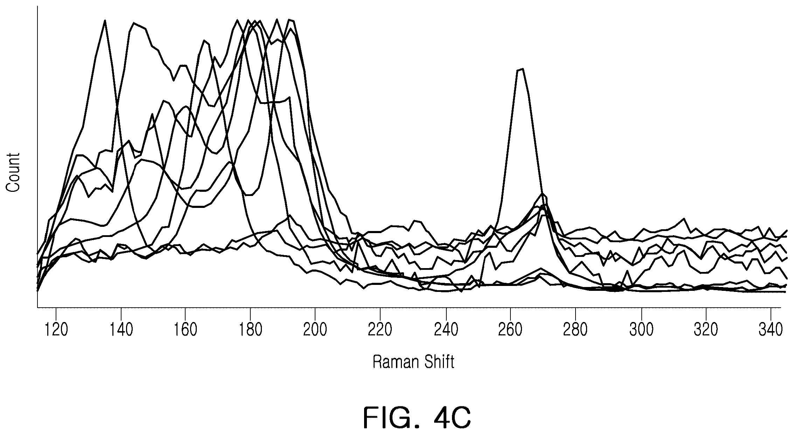

With reference to FIGS. 1 to 4C, embodiments of the present disclosure will be described in detail below. FIG. 1 is a schematic cross-sectional view illustrating a structure of an anode for a lithium secondary battery according to an embodiment, FIGS. 2A and 2B are views illustrating the results of Raman spectroscopy analysis for each of a first conductive material and a second conductive material included in an anode for a secondary battery according to an embodiment, FIG. 3 is a view illustrating the results of Raman spectroscopy analysis for an anode for a lithium secondary battery according to Reference Example 1, FIG. 4A is a view illustrating the results of Raman spectroscopy analysis for an anode for a lithium secondary battery according to Reference Example 2, FIG. 4B is an enlarged view of a G-band portion in FIG. 4A, and FIG. 4C is an enlarged view of a RBM peak portion in FIG. 4A.

Anode for Lithium Secondary Battery

Referring to FIG. 1, an anode 100 for a lithium secondary battery according to an embodiment of the present disclosure may include an anode current collector 10, an anode mixture layer 20 formed on at least one surface of the anode current collector 10. The anode mixture layer 20 may include a first anode mixture layer 21 formed on the anode current collector 10 and including a first silicon-based active material doped with a first metal and a first conductive agent, and a second anode mixture layer 22 formed on the first anode mixture layer 21 and including a second silicon-based active material doped with a second metal and a second conductive agent.

The first anode mixture layer 21 is an anode mixture layer (lower layer) on one surface adjacent to the anode current collector 10, and the second anode mixture layer 22 is an anode mixture layer (upper layer) formed on the first anode mixture layer 21 and relatively spaced apart from the anode current collector 10.

The anode current collector 10 may include a metal having excellent conductivity and excellent adhesion to an anode slurry. For example, the anode current collector may include stainless steel, copper, nickel, titanium, or alloys thereof. The anode current collector may also include copper surface-treated with carbon, nickel, titanium, or silver, or stainless steel surface-treated with carbon, nickel, titanium, or silver. Additionally, the anode current collector may be a polymer substrate coated with a conductive metal such as nickel, aluminum, titanium, or silver. As the anode current collector 10, a material selected from the group consisting of copper foil, nickel foil, stainless steel foil, titanium foil, nickel foam, copper foam, polymer substrate coated with a conductive metal, and combinations thereof may be properly used.

Each of the first anode mixture layer 21 and the second anode mixture layer 22 may include a first silicon-based active material doped with a first metal and a second silicon-based active material doped with a second metal. The first silicon-based active material and the second silicon-based active material may have micropores due to the doped first and second metals, respectively. The micropores may reduce the swelling of the anode 100 during secondary battery charging/discharging, may suppress the volume change of the first silicon-based active material and the second silicon-based active material, and may effectively alleviate the occurrence of active material cracking phenomena, and the like.

Each of the first and second metals may independently be at least one metal selected from an alkali metal, an alkaline earth metal, a transition metal, and other metals. Specifically, each of the first and second metals may independently be at least one metal selected from lithium (Li), magnesium (Mg), calcium (Ca), iron (Fe), titanium (Ti), vanadium (V), and aluminum (Al), and more specifically, each of the first and second metals may independently be at least one metal including magnesium (Mg). The first silicon-based active material and the second silicon-based active material doped with the above-described types of metals may be expressed by chemical formulas such as, for example, $Li_2SiO_3$, $Li_2Si_2O_5$, $Li_4SiO_4$, $MgSiO$, $MgSiO_3$, and the like.

In an embodiment, a content of the first metal doped into the first silicon-based active material based on a total weight of the first silicon-based active material may be less than a content of the second metal doped into the second silicon-based active material based on a total weight of the second silicon-based active material.

In an embodiment, the content of the first metal doped into the first silicon-based active material based on the total weight of the first anode mixture layer 21 may be less than the content of the second metal doped into the second silicon-based active material based on the total weight of the second anode mixture layer 22.

Specifically, the content of the first metal doped into the first silicon-based active material may be 1 to 5 wt% based on the total weight of the first silicon-based active material. When the content of the first metal doped into the first silicon-based active material is within the above-described range, high-temperature lifespan characteristics may be improved by the first silicon-based active material due to metal doping.

The content of the first metal doped into the first silicon-based active material based on the total weight of the first anode mixture layer 21 may be 0.04 to 0.5 wt%, specifically 0.05 to 0.5 wt%. When the content of the first metal doped into the first silicon-based active material is within the above-described range, the high-temperature lifespan characteristics may be improved by the first silicon-based active material due to metal doping.

The content of the second metal doped into the second silicon-based active material may be 7 to 15 wt% based on the total weight of the second silicon-based active material. When the content of the second metal doped into the second silicon-based active material is within the above-described range, the high-capacity characteristics may be secured by the second silicon-based active material due to the metal doping, and the rapid charge characteristics and the room-temperature lifespan characteristics may also be simultaneously improved.

The content of the second metal doped into the second silicon-based active material may be 1 to 3 wt% based on the total weight of the second anode mixture layer 22. When the content of the second metal doped into the second silicon-based active material is within the above-described range, the high-capacity characteristics may be secured by the second silicon-based active material due to the metal doping, and the rapid charge characteristics and the room-temperature lifespan characteristics may also be simultaneously improved.

A content of metal hydroxide (e.g., $Mg(OH)_2$) remaining on a surface of the first silicon-based active material may be less than about 0.05 wt% based on the total weight of the first silicon-based active material, and a content of the metal hydroxide (e.g., $Mg(OH)_2$) remaining on a surface of the second silicon-based active material may be less than about 0.05 wt% based on the total weight of the second silicon-based active material. When the content of the metal hydroxide remaining on the surface of the first silicon-based active material and the surface of the second silicon-based active material are each within the above-described range, a sufficient amount of metal may be doped into the first silicon-based active material and the second silicon-based active material, and side reactions on the surfaces of the first silicon-based active material and the second silicon-based active material may be each suppressed.

When a metal doped into each of the first silicon-based active material and the second silicon-based active material includes magnesium (Mg), an Mg1s spectrum of the surface of the first silicon-based active material and an Mg1s spectrum of the surface of the second silicon-based active material measured by X-ray photoelectron spectroscopy (XPS) may satisfy the following formula A, respectively.

$$[\text{Formula A}]$$
$$P_{Mg}/(P_{Mg}+P_{MgO}) \le 0.6$$

In formula A, $P_{Mg}$ is an area of the 1303 eV peak of the Mg1s spectrum, and $P_{MgO}$ is an area of the 1304.5 eV peak of the Mg1s spectrum.

The $P_{Mg}$ may be an area of the peak (1303 eV) representing a magnesium element, and the $P_{MgO}$ may be an area of the peak (1304.5 eV) representing the combination of the magnesium element and the oxygen element. Accordingly, a $P_{Mg}/(P_{Mg}+P_{MgO})$ value of the formula A may represent a ratio occupied by a magnesium metal, among a magnesium metal, magnesium oxide, and magnesium hydroxide respectively present on the surface of the first silicon-based active material and the surface of the second silicon-based active material.

When each of the first silicon-based active material and the second silicon-based active material satisfies the conditions according to the formula A, magnesium remaining on the surface of the first silicon-based active material and the surface of the second silicon-based active material may be converted into magnesium hydroxide to alleviate the occurrence of a side reaction with the electrolyte, thereby preventing the deterioration of the lifespan characteristics of the secondary battery.

For example, when the first silicon-based active material is included in the first anode mixture layer 21, which is a lower layer of the anode mixture layer 20, the anode 100 having excellent high-temperature lifespan characteristics may be provided, and when the second silicon-based active material is included in the second anode mixture layer 22 adjacent to the electrolyte, the anode 100 having excellent rapid charging characteristics, room-temperature lifespan characteristics, or the like, may be provided.

A method of doping the above-described types of metals into the first silicon-based active material and the second silicon-based active material is not particularly limited. For example, a method of (1) mixing a silicon-based active material and a metal precursor to form a mixture, (2) heating (sintering) the mixture at a temperature of 1000 to 2000°C and then cooling the mixture to form a composite, and (3) pulverizing and classifying a composite to manufacture a silicon-based active material doped with a metal may be applied, but the present disclosure is not limited thereto.

Each of the first silicon-based active material and the second silicon-based active material may include at least one selected from Si, $SiO_x$(0<x<2), Si-Q alloys (where Q is an element selected from the group consisting of alkali metals, alkaline earth metals, Group 13 elements, Group 14 elements, Group 15 elements, Group 16 elements, transition metals, rare earth elements, and combinations thereof, but not Si) and Si-C composites as raw materials of the silicon-based active material before metal doping. Specifically, each of the first silicon-based active material and the second silicon-based active material may include $SiO_x$(0<x<2) as raw materials of the silicon-based active material before metal doping.

The content of the first silicon-based active material in the first anode mixture layer 21 may be less than the content of the second silicon-based active material in the second anode mixture layer 22. The anode 100 for a lithium secondary battery may control the content of the silicon-based active material (the first silicon-based active material) included in the first anode mixture layer 21 adjacent to the anode current collector 10 to be lower than the content of the silicon-based active material (the second silicon-based active material) included in the second anode mixture layer 22, thereby more effectively preventing anode peeling and short-circuiting phenomena due to volume changes of the silicon-based active material during secondary battery charging/discharging, and also maintaining the content of the silicon-based active material as a whole of the anode on an appropriate level or higher to secure capacity characteristics. Specifically, the content of the first silicon-based active material in the first anode mixture layer may be about 0.1 to about 5 wt%, specifically, about 1 to about 4 wt%, and the content of the second silicon-based active material in the second anode mixture layer may be about 6 to about 30 wt%, specifically, about 10 to about 20 wt%.

A total content of the silicon-based active material in the anode mixture layer 20 (i.e., the total content of the first silicon-based active material and the second silicon-based active material based on the entire anode mixture layer 20) may be about 0.1 to about 20 wt%. Specifically, the total content of the silicon-based active material in the anode mixture layer 20 may be about 1 wt% or more, about 5 wt% or more, or about 7 wt% or more, and may be about 20 wt% or less, about 15 wt% or less, or about 13 wt% or less. When the total content of the silicon-based active material in the anode mixture layer 20 is within the above-described range, it may be possible to secure the high capacity characteristics of the secondary battery while also effectively alleviating the effect of the volume change of the silicon-based active material during battery charging/discharging.

According to an embodiment, the first anode mixture layer 21 may include only the first silicon-based active material as the silicon-based active material, and the second anode mixture layer 22 may include only the second silicon-based active material as the silicon-based active material, and according to another embodiment, each of the first anode mixture layer 21 and the second anode mixture layer 22 may include both the first silicon-based active material and the second silicon-based active material described above. In this case, the content of the first silicon-based active material in the first anode mixture layer 21 may be greater than the content of the second silicon-based active material, and the content of the second silicon-based active material in the second anode mixture layer 22 may be greater than the content of the first silicon-based active material.

Each of the first anode mixture layer 21 and the second anode mixture layer 22 may further include a carbon-based active material. The carbon-based active material may be at least one carbon-based material selected from artificial graphite, natural graphite, hard carbon, soft carbon, carbon black, acetylene black, Ketjen black, Super P, graphene, and fibrous carbon, and specifically, the carbon-based active material may be artificial graphite or natural graphite. When each of the first anode mixture layer 21 and the second anode mixture layer 22 further include a carbon-based active material, the content of the carbon-based active material in the first anode mixture layer 21 and the content of the carbon-based active material in the second anode mixture layer 22 may be, for example, about 80 to about 99 wt%, or about 85 to about 95 wt%, respectively.

Each of the first anode mixture layer 21 and the second anode mixture layer 22 may further include a conductive material. Specifically, the first anode mixture layer 21 may include the first conductive material, and the second anode mixture layer 22 may include the second conductive material. The conductive material may be used to provide conductivity to the electrode and maintain the structure of the electrode, or the like, and a material having conductivity without causing side reactions with other elements of the secondary battery may be used. According to an embodiment, in the anode mixture layer 20 having a multilayer structure, the first conductive material and the second conductive material included in the first anode mixture layer 21 and the second anode mixture layer 22 may be formed of different types, thereby providing a secondary battery anode 100 having improved capacity characteristics, improved lifespan characteristics, and the like.

The first conductive material may have a Raman R value according to the following formula 1 that is greater than that of the second conductive material.

$$[\text{Formula 1}]$$
$$\text{Raman R} = I_D/I_G$$

In formula 1, $I_D$ is a Raman peak intensity value in the absorption region of 1330 to 1380 cm$^{-1}$, and $I_G$ is a Raman peak intensity value in the absorption region of 1550 to 1625 cm$^{-1}$.

The Raman peak intensity value may be defined as the largest value measured in the absorption region which a peak represents by a Raman spectrometer, and may be specifically defined as a value from a base line to the top of the peak.

The Raman peak intensity value may be calculated from a Raman spectrum measured in a wavenumber range of about 100 to 2000 $cm^{-1}$ using a Raman spectrometer (RENISHAW Invia). In this case, Raman spectroscopy analysis may be performed on 50 points or more of a sample under the conditions of wavelength: 532 nm, magnification: 50 times, grating resolution: 1800 l/mm, laser power: 5% (0.8 mV), and number of scans: 10 times, and then an average value thereof may be calculated. In the measured Raman spectrum, $I_D$ as a target centered around about 1340 $cm^{-1}$ represents a maximum intensity value of the Raman peak in the absorption region of 1250 to 1350 $cm^{-1}$, specifically, in the absorption region of 1330 to 1380 $cm^{-1}$, and $I_G$ as a target centered around about 1580 $cm^{-1}$ is a maximum intensity value of the Raman peak in the absorption region of 1500 to 1700 $cm^{-1}$, specifically, in the absorption region of 1550 to 1625 $cm^{-1}$. The Raman peak intensity values may be determined from a base line drawn between two points disposed at 1215 $cm^{-1}$ and 1745 $cm^{-1}$ on the Raman spectrum.

The Raman R value is a parameter indicating the relative crystallinity of a material, and the $I_D$ value indicates the Raman peak intensity of a region related to an amorphous state, and the $I_G$ value indicates the Raman peak intensity of a region related to a crystalline state. Accordingly, as the Raman R value increases, as the crystallinity of the material is relatively reduced, and as the Raman R value decreases, the crystallinity of the material is relatively enhanced.

The Raman R value of the first conductive material may be about 0.11 to about 1.5, and specifically, may be about 0.11 or more or about 0.13 or more, and may be about 1.4 or less, about 1.0 or less, about 0.8 or less, about 0.5 or less, about 0.3 or less, or about 0.2 or less.

The Raman R value of the second conductive material may be about 0.001 to about 0.1, specifically, about 0.005 or more, about 0.01 or more, or about 0.03 or more, and about 0.09 or less.

When the Raman R value of the first conductive material is applied as described above, a conductive material having relatively low crystallinity may be included in the first anode mixture layer 21 adjacent to the anode current collector 10, the occurrence of problems such as electrode detachment due to volume expansion of the silicon-based active material may be substantially alleviated. Additionally, a conductive material having high crystallinity and excellent conductivity and dispersibility may be included in the second anode mixture layer 22 having relatively low energy density, so that a conductive path within the electrode layer may be formed and maintained, thereby further improving the rapid charging characteristics.

When the Raman R value of the second conductive agent is applied as described above, a conductive agent having relatively low crystallinity may be included in the first anode mixture layer 21 adjacent to the anode current collector 10, so that the occurrence of problems such as electrode detachment due to volume expansion of the silicon-based active material may be substantially alleviated. Additionally, a conductive agent having high crystallinity and excellent conductivity and dispersibility may be included in the second anode mixture layer 22 having relatively low energy density, so that a conductive path within the electrode layer may be formed and maintained, thereby further improving the rapid charging characteristics.

The first conductive agent refers to a conductive agent included in the first anode mixture layer 21, which is a lower layer, as a conductive agent that may have relatively low reactivity with the electrolyte and a small specific surface area to alleviate the occurrence of side reactions with the electrolyte. The second conductive material refers to a conductive material that may have relatively excellent dispersibility and conductivity and may form a conductive path that may increase electrical contact between each component so as to minimize a phenomenon of electrical network disconnection and to alleviate the increase in resistance even when the volume of the silicon-based active material changes during battery charging/discharging, which is a conductive material included in the second anode mixture layer 22 as an upper layer.

The first conductive material may include any one selected from graphite-based conductive material, multi-walled carbon nanotubes (MWCNT), and combinations thereof. Specifically, the first conductive material may include any one selected from artificial graphite, natural graphite, graphene, carbon black, acetylene black, Ketjen black, Super P, hard carbon, multi-walled carbon nanotubes (MWCNT), and combinations thereof.

The second conductive material may include a CNT-based conductive material. Specifically, the second conductive material may include any one selected from single-walled carbon nanotubes (SWCNT), thin-walled carbon nanotubes (TWCNT), and combinations thereof.

More specifically, the first conductive material may be any one graphite-based conductive material selected from artificial graphite, natural graphite, and combinations thereof. When a graphite-based conductive material corresponding to a carbon-based active material and an anode active material is applied as the first conductive material, it may be possible to reduce electrolyte consumption by alleviating side reactions with the electrolyte, and also contribute to further improving the capacity characteristics of the anode 100.

A CNT-based conductive material such as a single-walled carbon nanotube (SWCNT) or a thin-walled carbon nanotube (TWCNT) may be applied as the second conductive material. When SWCNT, TWCNT or combinations thereof are applied as the second conductive material, the electrical contact between the components included in the anode mixture layer 20 may be increased, so that the conductive path may be formed more easily, and the influence of the volume change of the silicon-based active material during battery charging/discharging may be minimized, and the increase in resistance may be further alleviated.

The anode 100 for a lithium secondary battery may exhibit a Radial Breathing Mode (RBM) peak in the Raman spectrum obtained from the surface of the second anode mixture layer 22. In this case, the RBM peak may not be substantially exhibited in the Raman spectrum obtained from the surface of the first anode mixture layer 21.

The anode 100 for a lithium secondary battery may exhibit G-band splitting in the Raman spectrum obtained from the surface of the second anode mixture layer 22. In this case, G-band splitting may not be substantially exhibited in the Raman spectrum obtained from the surface of the first anode mixture layer 21. Whether the RBM peak and the G-band splitting are exhibited in the Raman spectroscopy analysis of the anode mixture layer 20 may vary depending on the component included in the anode mixture layer 20, specifically, the type of conductive material.

The RBM peak is a peak exhibited in a low-wavelength region of about 100 to about 500 $cm^{-1}$, specifically, about 100 to about 350 $cm^{-1}$ in the Raman spectrum, and the RBM peak may be exhibited in various low-wavelength regions, for example, about 130 $cm^{-1}$, about 150 $cm^{-1}$, about 180 $cm^{-1}$, about 190 $cm^{-1}$, and about 270 $cm^{-1}$. Whether the RBM peak is exhibited may be determined by a ratio ($A_{RBM}/A_G$) between an area ($A_{RBM}$) of the RBM peak region and an area ($A_G$) of the G-band peak region. Specifically, when an $A_{RBM}/A_G$ value is about 0.03 to about 0.06, the RBM peak may be determined to be exhibited, and when the $A_{RBM}/A_G$ value is about 0.001 to about 0.02, the RBM peak may be determined not to be exhibited.

The area ($A_{RBM}$) of the RBM peak region and the area ($A_G$) of the G-band peak region may be calculated by integrating an area of the absorption region in which the RBM peak is exhibited by a Raman spectrometer. Specifically, the area ($A_{RBM}$) of the RBM peak region and the area ($A_G$) of the G-band peak region may be calculated using the Resolutions Pro program. In this case, the area ($A_{RBM}$) of the RBM peak region may be calculated by deriving a base line using a second derivative method, and then integrating an area derived by fitting peaks corresponding to wavenumbers of about 106 $cm^{-1}$, about 123 $cm^{-1}$, and about 201 to about 234 $cm^{-1}$ to a Gaussian curve, and the area ($A_G$) of the G-band peak region may be calculated using the same method as described above for the peaks corresponding to wavenumbers of about 1215 $cm^{-1}$, about 1565 $cm^{-1}$, and about 1600 to about 1745 $cm^{-1}$. In this case, the Raman spectroscopy analysis may be performed under the conditions of wavelength: 532 nm, magnification: 50 times, grating resolution: 1800 l/mm, laser power: 5%, and number of scans: 10 times.

The G-band is a portion in which a peak is exhibited in an absorption region of about 1550 to about 1625 $cm^{-1}$ during Raman spectroscopy analysis, and the G-band splitting denotes that the above-described G-band is exhibited as a multiple or composite peak due to two components. Specifically, the G-band splitting may denote that both a $G^1$-band, which has a peak in the absorption region of about 1568 to about 1586 $cm^{-1}$, and a $G^2$-band, which has a peak in the absorption region of about 1587 to about 1595 $cm^{-1}$, are exhibited during Raman spectroscopy analysis.

The Raman spectroscopy analysis of the surface of the anode mixture layer 20 may be performed for 10 or more points (for example, 10 to 5000 points), and it may be determined that the reliability increases as the number of points increases. Additionally, in the case of an anode 100 having a multilayer structure, when the Raman spectroscopy analysis is performed on the surface of the first anode mixture layer 21, this may be performed on a point included in a region adjacent to the anode current collector 10 (for example, a region having a thickness from about 0.1 to 20% of a total thickness of the anode mixture layer 20 in a thickness direction of the anode mixture layer 20 from the anode current collector 10), and when the Raman spectroscopy analysis is performed on the surface of the second anode mixture layer 22, this may be performed on a point included in a region spaced from the anode current collector 10 (for example, a region to about 0.1 to 10% of the total thickness of the anode mixture layer 20 in the thickness direction of the anode mixture layer 20 from an outermost surface of the anode mixture layer 20. In this case, the Raman spectroscopy analysis may be performed under the following conditions: wavelength: 532 nm, magnification: 50 times, grating resolution: 1800 l/mm, laser power: 5%, and number of scans: 10.

Referring to FIGS. 2A and 2B, it may be confirmed that in the Raman spectroscopy analysis of the first conductive material (graphite-based conductive material) included in the anode for a secondary battery according to an embodiment, neither the RBM peak nor the G-band splitting is exhibited (see FIG. 2A), whereas in the Raman spectroscopy analysis of the second conductive material (CNT-based conductive material), both the RBM peak and the G-band splitting are exhibited (see FIG. 2B). Additionally, referring to FIG. 3, it may be confirmed that in the Raman spectroscopy analysis of the anode including the first conductive material, neither the RBM peak nor the G-band splitting is exhibited. Meanwhile, referring to FIGS. 4A to 4C, it may be confirmed that in the Raman spectroscopy analysis of the anode including the second conductive material, both the RBM peak and the G-band splitting are exhibited.

In this manner, whether the RBM peak and the G-band splitting are exhibited in the Raman spectroscopy analysis of the anode mixture layer may vary depending on the type of conductive material included in the anode mixture layer, and when different types of conductive material are applied for each upper and lower layer in a multilayered anode, whether the RBM peaks and the G-band splitting are exhibited in the Raman spectroscopy analysis of the surfaces of the anode mixture layers of the upper and lower layers may vary. Accordingly, as described above, when the RBM peak and the G-band splitting are exhibited in the Raman spectrum obtained from the surface of the second anode mixture layer 22, and the RBM peak and the G-band splitting are not exhibited in the Raman spectrum obtained from the surface of the first anode mixture layer 21, it may be determined that the first anode mixture layer 21 includes the first conductive material, and the second anode mixture layer 22 includes the second conductive material.

In the case in which the types of conductive materials are applied differently for each upper/lower layer in the multilayered anode so that the observation of RBM peaks and G-band splitting are different for each upper/lower layer, the first conductive material having relatively low crystallinity may be included in the first anode mixture layer 21 adjacent to the anode current collector 10, the occurrence of problems such as electrode detachment due to volume expansion of the silicon-based active material may be substantially alleviated. Additionally, the second conductive material having high crystallinity and excellent conductivity and dispersibility may be included in the second anode mixture layer 22 having relatively low energy density, so that a conductive path may be formed and maintained within the electrode layer, thereby further improving the rapid charging characteristics.

A particle diameter (D50) of the first conductive material may be about 1 to about 10 $\mu$m, and specifically, the particle diameter (D50) of the first conductive material may be about 2 to about 7 $\mu$m. A length of the second conductive material may be about 5 to about 100 $\mu$m. Additionally, a particle diameter (D50) of the second conductive agent may be about 1 to about 15 nm. The particle diameter (D50) refers to an average particle diameter based on 50% of the particle diameter distribution, and may be measured and calculated by a conventional particle diameter measuring device (for example, Microtrac MT 3000) and method.

The content of the first conductive agent in the first anode mixture layer 21 may be greater than the content of the second conductive agent in the second anode mixture layer 22. Specifically, the content of the first conductive agent in the first anode mixture layer 21 may be about 0.3 to about 5 wt%, and the content of the second conductive agent in the second anode mixture layer 22 may be about 0.01 to about 0.25 wt%. More specifically, the content of the first conductive material in the first anode mixture layer 21 may be about 0.3 to about 3 wt%, about 0.35 to about 1 wt%, or about 0.4 to about 0.6 wt%, and the content of the second conductive material in the second anode mixture layer 22 may be about 0.05 to about 0.15 wt%.

When the contents of the first conductive material and the second conductive material are adjusted within the above-described range, the content of the conductive material included in the first anode mixture layer 21 formed on one surface adjacent to the anode current collector 10 is adjusted to be relatively high, thereby increasing a contact point between the anode current collector 10 and the first anode mixture layer 21. When these contact points increase, the resistance between the anode 100 and the anode current collector 10 may be reduced, and even if the anode 100 expands during use, the contact point between the anode current collector 10 and the anode 100 may be maintained. Additionally, the content of the second conductive material included in the second anode mixture layer 22 may be adjusted to be relatively low, so that the content of the conductive material included in the entire anode 100 may be reduced to secure economic feasibility, and the content of the active material in the anode mixture layer 20 may be increased to implement an anode 100 having the same energy density having a relatively low loading weight. Additionally, when an excessive amount of conductive material is included in the upper layer, the pores may be blocked, which may cause a decrease in the interface resistance and lifespan characteristics of the anode 100, but this problem may be alleviated by including the conductive material within the content range.

According to an embodiment, the first anode mixture layer 21 may include only the first conductive material as a conductive material, and the second anode mixture layer 22 may include only the second conductive material as a conductive material, and according to another embodiment, each of the first anode mixture layer 21 and the second anode mixture layer 22 may include both the first conductive material and the second conductive material as conductive materials. In this case, the content of the first conductive material in the first anode mixture layer 21 may be greater than the content of the second conductive material, and the content of the second conductive material in the second anode mixture layer 22 may be greater than the content of the first conductive material. According to yet another embodiment, the first anode mixture layer 21 may include both the first conductive material and the second conductive material as conductive materials. In this case, the content of the second conductive material included in the first anode mixture layer 21 may be less than the content of the first conductive material included in the first anode mixture layer 21, and may be less than the content of the second conductive material included in the second anode mixture layer 22. According to yet another embodiment, the first anode mixture layer 21 may include only the first conductive material as a conductive material, and the second anode mixture layer may include both the first conductive material and the second conductive material.

Each of the first anode mixture layer 21 and the second anode mixture layer 22 may further include an additional conductive material. For example, as the additional conductive material, metal powder particles or metal fibers such as copper, nickel, aluminum and silver; conductive whiskers such as zinc oxide and potassium titanate; conductive metal oxides such as titanium oxide; or conductive polymers such as polyphenylene derivatives may be applied alone or in combination of two or more types thereof.

Each of the first anode mixture layer 21 and the second anode mixture layer 22 may each further include a binder.

The binder is not particularly limited as long as this is a compound that serves to attach the components in the anode mixture layer 20 well to each other and to attach the anode mixture layer 20 well to the anode current collector 10, and for example, as the binder, a rubber-based binder such as styrene-butadiene rubber (SBR), fluorine-based rubber, ethylene propylene rubber, butadiene rubber, isoprene rubber, silane-based rubber, or the like; a cellulose-based binder such as carboxymethyl cellulose (CMC), hydroxypropyl methyl cellulose, methyl cellulose, or an alkali metal salt thereof; and combinations thereof. Specifically, each of the first anode mixture layer 21 and the second anode mixture layer 22 may include a rubber-based binder, and more specifically, each of the first anode mixture layer 21 and the second anode mixture layer 22 may include a rubber-based binder and a cellulose-based binder.

When each of the first anode mixture layer 21 and the second anode mixture layer 22 further includes the binder, the content of the binder in the first anode mixture layer 21 and the content of the binder in the second anode mixture layer 22 may be, for example, about 0.1 to about 10 wt%.

In an embodiment, when each of the first anode mixture layer 21 and the second anode mixture layer 22 further includes the rubber-based binder, the content of the rubber-based binder in the first anode mixture layer 21 may be greater than or equal to the content of the rubber-based binder in the second anode mixture layer 22. Specifically, the content of the rubber-based binder in the first anode mixture layer 21 may be about 1.0 to about 3 wt%, and the content of the rubber-based binder in the second anode mixture layer 22 may be about 0.1 to about 1.0 wt%. More specifically, the content of the rubber-based binder in the first anode mixture layer 21 may be about 1.5 to about 2.5 wt%, and the content of the rubber-based binder in the second anode mixture layer 22 may be about 0.4 to about 0.8 wt%.

When the content of the rubber-based binder in the first anode mixture layer 21 is significantly low, the adhesive strength of the first anode mixture layer 21 adjacent to the anode current collector 10 may be reduced, which may cause problems such as scrap generation and mixture layer detachment during a notching process. On the other hand, when the content of the rubber-based binder is significantly high in the anode 100 as a whole, the electrical resistance may increase, which may deteriorate the battery characteristics. Accordingly, when the content of the rubber-based binder included in the first anode mixture layer 21, which is the lower layer, is adjusted to be relatively higher than the content of the rubber-based binder included in the second anode mixture layer 22, which is the upper layer, the content of the rubber-based binder may be lowered in the anode 100 as a whole while substantially alleviating the occurrence of the above-described problems, and thus the increase in electrical resistance may also be alleviated. Accordingly, when a content relationship of the rubber-based binder for each anode mixture layer is applied as described above, the anode 100 having a multilayer structure may have excellent flexibility, adhesiveness, and the like, so that problems such as electrode detachment during the process or cracking or electrode detachment during the charging/discharging process may be substantially alleviated, and low resistance characteristics may also be secured.

A loading weight (LW) ratio of the first anode mixture layer 21 and the second anode mixture layer 22 may be about 2:8 to about 8:2. Additionally, the loading weight of the first anode mixture layer 21 may be about 1.5 to about 9.5 mg/cm$^2$, and the loading weight of the second anode mixture layer 22 may be about 1.5 to about 9.5 mg/cm$^2$. The loading weight (LW) refers to a result obtained by expressing, in units of weight per area, an amount of the anode mixture layer 20 formed on the anode current collector 10, that is, a layer including an active material, a binder and a conductive material formed on the anode current collector 10. In this case, the area is based on the area of the anode current collector 10, and the weight is based on the weight of the entire formed anode mixture layer 20. When the loading weight (LW) values, ratios, and the like, of the first anode mixture layer 21 and the second anode mixture layer 22 are within the above-described range, a multilayer structured anode 100 having excellent capacity characteristics, excellent lifespan characteristics, excellent rapid charging characteristics, and the like, may be provided.

The method of manufacturing the anode 100 for a lithium secondary battery is not particularly limited. For example, an anode slurry including a first solvent, a first silicon-based active material and a first conductive agent may be applied to an anode current collector 10 by a method such as bar coating, casting, or spraying, and then dried in a temperature range of about 70 to about 100°C to form a first anode mixture layer 21, and then an anode slurry including a second solvent, a second silicon-based active material and a second conductive agent may be applied to the first anode mixture layer 21 by a method such as bar coating, casting, or spraying, and then dried in a temperature range of about 70 to about 100°C to form a second anode mixture layer 22.

The solvent may be, for example, dimethyl sulfoxide (DMSO), isopropyl alcohol, N-methylpyrrolidone (NMP), acetone, or water, and the amount of the solvent used is sufficient to dissolve or disperse the active material, the conductive material, and the binder in consideration of a coating thickness and a manufacturing yield of a composition for forming the anode mixture layer, and to have a viscosity that may exhibit excellent thickness uniformity during subsequent coating for forming the anode mixture layer.

Lithium Secondary Battery

A lithium secondary battery according to an embodiment may include an anode 100 for a lithium secondary battery according to one of the above-described embodiments. Specifically, the lithium secondary battery may include an anode 100 for a lithium secondary battery according to one of the above-described embodiments and a cathode, and optionally may or may not include a separator interposed between the cathode and the anode.

The above cathode may include a lithium-transition metal composite oxide as a cathode active material. Specifically, the lithium-transition metal composite oxide may be an NCM-based cathode active material represented by the chemical formula $Li_xNi_aCo_bMn_cO_y$ ($0<x\leq1.1$, $2\leq y\leq2.02$, $0<a<1$, $0<b<1$, $0<c<1$, $0<a+b+c\leq1$), or a lithium iron phosphate (LFP)-based cathode active material represented by the chemical formula $LiFePO_4$.

The separator may include a porous polymer film manufactured from a polyolefin-based polymer such as an ethylene homopolymer, a propylene homopolymer, an ethylene/butene copolymer, an ethylene/hexene copolymer, or an ethylene/methacrylate copolymer. Additionally, the separator may include a nonwoven fabric formed from high-melting-point glass fibers, polyethylene terephthalate fibers, or the like.

The lithium secondary battery may have excellent high-capacity characteristics, lifespan characteristics, and rapid charging characteristics, and thus may be very useful as a power source for electric vehicles (EVs).

Examples

Hereinafter, specific embodiments of the present disclosure will be described by way of example. However, the following examples are specific examples for each embodiment of the present disclosure and are not limited thereto.

1. Manufacturing of Anode and Secondary battery

1) Manufacturing of Anode

(1) Reference Examples 1 and 2

In order to confirm the electrode Raman analysis results according to the type of conductive material, a single-layer structured anode mixture layer having a composition as shown in Table 1 below was manufactured, and Raman spectroscopy analysis was performed to confirm an $A_{RBM}/A_G$ value, whether an RBM peak was observed, and whether G-band splitting was observed, and results thereof are shown in Table 1 below.

An area ($A_{RBM}$) of an RBM peak region and an area ($A_G$) of a G-band peak region were calculated using Resolutions Pro Software (Agilent Technologies, version 5.2.0 (CD 846)). In this case, the area ($A_{RBM}$) of the RBM peak region was calculated by deriving a base line using a second derivative method to derive the base line, and then integrating an area derived by fitting the peaks corresponding to wavenumbers of 106 cm$^{-1}$, 123 cm$^{-1}$, and 201 to 234 cm$^{-1}$ to a Gaussian curve, and the area ($A_G$) of the G-band peak region was calculated using the same method as described above for the peaks corresponding to wavenumbers of 1215 cm$^{-1}$, 1565 cm$^{-1}$, and 1600 to 1745 cm$^{-1}$. Additionally, the Raman spectroscopy analysis was performed under the conditions of wavelength: 532 nm, magnification: 50 times, grating resolution: 1800 l/mm, laser power: 5%, and number of scans: 10 times.

Meanwhile, a graphite-based conductive material that does not exhibit both the RBM peak and the G-band splitting in Raman spectroscopy was used as a conductive material of Reference Example 1, and a carbon nanotube conductive material (see FIG. 2B) that exhibits both the RBM peak and the G-band splitting in Raman spectroscopy was used as a conductive material of Reference Example 2.

Table 1:

| | Silicon-based Active Material | | Conductive Material | | RBM Peak | | G-band splitting observation Status |
|---|---|---|---|---|---|---|---|
| | Type | Content (wt%) | RBM Peak and G-band splitting observation Status | Content (wt%) | $A_{RBM}/A_G$ | Observation status | |
| Reference Example 1 | Mg-doped $SiO_x$ | 2 | X | 3 | 0.001 | X | X |
| Reference Example 2 | Mg-doped $SiO_x$ | 2 | O | 0.1 | 0.045 | O | ○ |

Referring to Table 1, it was confirmed the anode mixture layer of Reference Example 1, which includes the graphite-based conductive material that does not exhibit both the RBM peak and the G-band splitting has an $A_{RBM}/A_G$ value of 0.001 in the Raman spectroscopy analysis, which falls within the range of 0.001 to 0.02, indicating that no RBM peak was exhibited, and the G-band splitting was also not observed (see FIG. 3). On the other hand, it was confirmed the anode mixture layer of Reference Example 2, which includes carbon nanotubes that exhibit both the RBM peak and the G-band splitting, has an $A_{RBM}/A_G$ value of 0.045 in the Raman spectroscopy analysis, which falls within the range of 0.03 to 0.06, indicating that the RBM peak was exhibited, and the G-band splitting was observed (see FIG. 4A). Considering these results, it is determined that whether to observe the RBM peak and the G-band splitting in the Raman spectrum obtained from the surface of the anode mixture layer may vary depending on the type of conductive material included in the anode mixture layer.

(2) Inventive Examples 1 to 5 and Comparative Examples 1 to 3

A first anode slurry including a carbon-based active material, a first silicon-based active material, a binder, and a first conductive agent; and a second anode slurry including a carbon-based active material, a second silicon-based active material, a binder, and a second conductive agent were manufactured, respectively.

Then, the first anode slurry and the second anode slurry were simultaneously applied to copper foil as an anode current collector, and then dried at 80°C, thereby manufacturing a multilayer lithium anode for a secondary battery including a first anode mixture layer formed on the anode current collector; and a second anode mixture layer formed on the first anode mixture layer. The loading weight (LW) ratio of the first anode mixture layer and the second anode mixture layer was applied as 5:5.

In this case, in each inventive example and each comparative example, artificial graphite (D50 = 10 $\mu$m) was applied as a carbon-based active material, and carboxymethyl cellulose (CMC) and styrene-butadiene rubber (SBR) were applied as binders.

Additionally, the first silicon-based active material and the second silicon-based active material used silicon-based active materials as shown in Table 2 and Table 3 below, respectively.

Meanwhile, graphite (D50 = 4 $\mu$m), MWCNT, and SWCNT were used as the first and second conductive materials as shown in Tables 2 and 3. The types and contents of the first and second conductive materials, and Raman R of each conductive material, and the observation status of the RBM peak, and the G-band splitting are shown in Tables 2 and 3. The Raman R value may be calculated according to the following formula 1 below.

$$[\text{Formula 1}]$$
$$\text{Raman R} = I_D/I_G$$

In formula 1, $I_D$ is the Raman peak intensity value in the absorption region of 1330 to 1380 cm$^{-1}$, and $I^G$ is a Raman peak intensity value in the absorption region of 1550 to 1625 cm$^{-1}$.

Here, the Raman peak intensity value may be defined as the largest value measured in the absorption region in which a peak is exhibited by a Raman spectrometer, and may be specifically defined as a value from the base line to the top of the peak.

The Raman peak intensity value was calculated from a Raman spectrum measured in a wavenumber range of 100 to 2000 cm$^{-1}$ using a Raman spectrometer (RENISHAW Invia). In this case, the Raman spectroscopy analysis was performed on 50 points or more of the sample under the conditions of wavelength: 532 nm, magnification: 50 times, grating resolution: 1800 l/mm, laser power: 5% (0.8 mV), and number of scans: 10 times, and then an average value thereof was calculated. In the measured Raman spectrum, the $I_D$ of the object centered around 1340 cm$^{-1}$ was a maximum intensity value of the Raman peak in the absorption region of 1330 to 1380 cm$^{-1}$, and the $I_G$ of the object centered around 1580 cm$^{-1}$ was a maximum intensity value of the Raman peak in the absorption region of 1550 to 1625 cm$^{-1}$. The Raman peak intensity value was determined from the base line drawn between two points disposed at 1215 cm$^{-1}$ and 1745 cm$^{-1}$ on the Raman spectrum.

Additionally, the observation of the RBM peak and the G-band splitting was determined by the same method as in (1) Reference Examples 1 and 2.

Meanwhile, in Inventive Examples 1 to 5, the contents of carboxymethyl cellulose (CMC) and styrene-butadiene rubber (SBR), which are binders in the first anode mixture layer, were set to 1.2 wt% and 2.4 wt%, respectively, and the contents of carboxymethyl cellulose (CMC) and styrene-butadiene rubber (SBR), which are binders in the second anode mixture layer, were set to 1.2 wt% and 0.6 wt%, respectively.

In Comparative Examples 1 to 3, the contents of carboxymethyl cellulose (CMC) and styrene-butadiene rubber (SBR), which are binders in the first anode mixture layer and the second anode mixture layer, were 1.2 wt% and 0.6 wt%, respectively.

The content of the first silicon-based active material in the first anode mixture layer, the content of the first metal doped into the first silicon-based active material based on the total weight of the first silicon-based active material, the content of the first metal doped into the first silicon-based active material based on the total weight of the first anode mixture layer, the content of the second silicon-based active material in the second anode mixture layer, the content of the second metal doped into the second silicon-based active material based on the total weight of the second silicon-based active material, and the content of the second metal doped into the second silicon-based active material based on the total weight of the second anode mixture layer were applied according to the inventive examples and comparative examples as shown in Tables 2 and 3 below.

Additionally, the content of the first conductive material and the content of the second conductive material were applied as shown in Table 2 and Table 3 below.

Table 2:

| Content Unit: wt% | | | | Inventive Example | | | | |
|---|---|---|---|---|---|---|---|---|
| | | | | 1 | 2 | 3 | 4 | 5 |
| First Anode Mixture layer (Lower Layer) | Anode Active Material | Graphite-based | Type | Artificial Graphite | | | | |
| | | | Content | 89.6 | 90.9 | 90.4 | 90.4 | 94.9 |
| | | First Silicon-based | Type | $SiO_x$ | $SiO_x$ | $SiO_x$ | $SiO_x$ | $SiO_x$ |
| | | | Content | 5 | 5 | 3 | 3 | 1 |
| | | Doping Metal | Type | Mg | Mg | Mg | Mg | Mg |
| | | | Content — Based on a total weight of the First $SiO_x$ | 3 | 3 | 3 | 3 | 4 |
| | | | Based on a total weight of the Lower Layer | 0.15 | 0.15 | 0.09 | 0.09 | 0.04 |
| | First Conductive Material | | Type | Graphite/ MWCNT | MWCNT | Graphite | Graphite | Graphite |
| | | | Content | 1.5/0.3 | 0.5 | 3 | 3 | 0.5 |
| | | | Raman R | 0.84 | 1.4 | 0.15 | 0.15 | 0.15 |
| | | | Observation of RBM Peak | X | X | X | X | ○ |
| | | | Observation of G-band splitting | X | X | X | X | O |
| | Binder | | CMC Content | 1.2 | 1.2 | 1.2 | 1.2 | 1.2 |
| | | | SBR Content | 2.4 | 2.4 | 2.4 | 2.4 | 2.4 |
| Second | Anode | Graphite- | Type | Artificial Graphite | | | | |

| Content Unit: wt% | | | | Inventive Example | | | | |
|---|---|---|---|---|---|---|---|---|
| | | | | 1 | 2 | 3 | 4 | 5 |
| Anode Mixture Layer (Upper Layer) | Active Material | based | Content | 85.1 | 85.1 | 83.1 | 83.1 | 81 |
| | | Second Silicon-based | Type | $SiO_x$ | $SiO_x$ | $SiO_x$ | $SiO_x$ | $SiO_x$ |
| | | | Content | 13 | 13 | 15 | 15 | 17 |
| | | doping Metal | Type | Mg | Mg | Mg | Li | Mg |
| | | | Content — Based on a total weight of the Second $SiO_x$ | 8 | 8 | 8 | 10 | 8 |
| | | | Based on a total weight of the Upper Layer | 1.04 | 1.04 | 1.2 | 1.5 | 1.36 |
| | Second Conductive Material | Type | | SWCNT | SWCNT | SWCNT | SWCNT | SWCNT |
| | | Content | | 0.1 | 0.1 | 0.1 | 0.1 | 0.2 |
| | | Raman R | | 0.07 | 0.07 | 0.07 | 0.07 | 0.07 |
| | | Observation of RBM Peak | | ○ | ○ | ○ | ○ | ○ |
| | | Observation of G-band splitting | | ○ | ○ | ○ | ○ | ○ |
| | Binder | CMC Content | | 1.2 | 1.2 | 1.2 | 1.2 | 1.2 |
| | | SBR Content | | 0.6 | 0.6 | 0.6 | 0.6 | 0.6 |

Table 3:

| Content Unit: wt% | | | | | | Comparative Example | | |
|---|---|---|---|---|---|---|---|---|
| | | | | | | 1 | 2 | 3 |
| First Anode Mixture Layer (Lower Layer) | Anode Active Material | Graphite-based | Type | | | Artificial Graphite | | |
| | | | Content | | | 93.7 | 93.7 | 92.2 |
| | | First Silicon-based | Type | | | $SiO_x$ | $SiO_x$ | $SiO_x$ |
| | | | Content | | | 3 | 3 | 3 |
| | | | doping Metal | Type | | Mg | - | - |
| | | | | Content | Based on a total weight of the First $SiO_x$ | 3 | 0 | 0 |
| | | | | | Based on a total weight of the Lower Layer | 0.09 | 0 | 0 |
| | First Conductive Material | Type | | | | Graphite | Graphite | Graphite |
| | | Content | | | | 1.5 | 1.5 | 3 |
| | | Raman R | | | | 0.15 | 0.15 | 0.15 |
| | | Observation of RBM Peak | | | | X | X | X |
| | | Observation of G-band splitting | | | | X | X | X |
| | Binder | CMC Content | | | | 1.2 | 1.2 | 1.2 |
| | | SBR Content | | | | 0.6 | 0.6 | 0.6 |
| Second Anode Mixture Layer (Upper Layer) | Anode Active Material | Graphite-based | Type | | | Artificial Graphite | | |
| | | | Content | | | 81.7 | 83.1 | 83.1 |
| | | Second Silicon-based | Type | | | $SiO_x$ | $SiO_x$ | $SiO_x$ |
| | | | Content | | | 15 | 15 | 15 |
| | | | doping Metal | Type | | Mg | - | Mg |
| | | | | Content | Based on a total weight of the Second $SiO_x$ | 3 | 0 | 3 |
| | | | | | Based on a total weight of the Upper Layer | 0.45 | 0 | 0.45 |
| | Second Conductive Material | Type | | | | Graphite | MWCNT | MWCNT |
| | | Content | | | | 1.5 | 0.1 | 0.1 |
| | | Raman R | | | | 0.15 | 1.43 | 1.43 |
| | | Observation of RBM Peak | | | | X | X | X |
| | | Observation of G-band splitting | | | | X | ○ | ○ |
| | Binder | CMC Content | | | | 1.2 | 1.2 | 1.2 |
| | | SBR Content | | | | 0.6 | 0.6 | 0.6 |

2) Manufacturing of secondary battery

A cathode slurry including an NCM-based active material, which is a lithium-transition metal composite oxide, was applied and dried on aluminum foil to manufacture a cathode, and a secondary battery cell manufactured by interposing a polyolefin separator between the cathode and the above-manufactured anode was inserted into a secondary battery pouch, and then an electrolyte solution in which 1M of $LiPF_6$ was dissolved in a solvent mixed with ethylene carbonate (EC) and diethyl carbonate (DEC) was injected into the secondary battery pouch, and then sealed, thereby manufacturing a pouch-type lithium secondary battery. The manufactured pouch-type lithium secondary battery was applied as a secondary battery sample of each inventive example and each comparative example.

2. Evaluation of secondary battery

1) Capacity Retention Rate at room temperature (25°C)

For the secondary battery manufactured as described above, a lifespan characteristics evaluation in the range of SOC4%-98%(DOD94%) was conducted in a chamber maintained at 25°C. The secondary battery was charged at 0.3C to a voltage corresponding to SOC98% under constant current/constant voltage (CC/CV) conditions, then cut off at 0.05C, and then discharged at 0.3C to a voltage corresponding to SOC4% under constant current (CC) conditions, and the discharge capacity thereof was measured. After repeating this operation for 300 cycles, the discharge capacity retention rate as compared to the initial discharge capacity was measured as a %, and the capacity retention rate at the time of the room temperature lifespan characteristics evaluation was measured, and results thereof are shown in Table 4 below.

2) High Temperature (45°C) Capacity Retention Rate

For the secondary battery manufactured as described above, the capacity retention rate at the time of the high temperature lifespan characteristics evaluation was measured in a chamber maintained at 45°C by the same method as that of the room temperature (25°C) lifespan characteristics evaluation, and the results thereof are shown in Table 4 below.

3) Rapid Charge Capacity Retention Rate

The secondary battery manufactured as described above was charged from SOC8% to SOC80% (DOD (Depth of Discharge) 72%) within 35 minutes according to a step charge method (C-rate: 2.5C/2.25C/2.0C/1.75C/1.5C/1.25C/1.0C/0.75C/0.5C), and then discharged at 1/3C. The charging/discharging was considered as 1 cycle, and 100 cycles were repeated with a waiting time of 10 minutes between the charging/discharging cycles, and then, the discharge capacity retention rate as compared to the initial discharge capacity was measured as a % to measure the rapid charge capacity retention rate, and the results thereof are shown in Table 4 below.

Table 4:

| | Room Temperature Capacity Retention Rate (%) | High Temperature Capacity Retention Rate (%) | Rapid Charge Capacity Retention Rate (%) |
|---|---|---|---|
| Inventive Example 1 | 96.9 | 87.7 | 95.5 |
| Inventive Example 2 | 97.5 | 87.4 | 95.7 |
| Inventive Example 3 | 98.2 | 84.4 | 96.9 |
| Inventive Example 4 | 98.7 | 84.9 | 97.2 |
| Inventive Example 5 | 95.4 | 88.6 | 96.4 |
| Comparative Example 1 | - (termination with a rapid decrease after 120 cycles) | - (termination after 100 cycles) | 71.1 |
| Comparative Example 2 | - (termination with a rapid decrease after 120 cycles) | - (termination after 100 cycles) | - (termination with a rapid decrease) |

(continued)

|  | Room Temperature Capacity Retention Rate (%) | High Temperature Capacity Retention Rate (%) | Rapid Charge Capacity Retention Rate (%) |
|---|---|---|---|
| Comparative Example 3 | - (termination with a rapid decrease after 120 cycles) | - (termination after 100 cycles) | 70.8 |

Referring to Tables 2 and 4, the anodes of Inventive Examples 1 to 5 showed excellent capacity retention rates at room temperature and high temperature and excellent rapid charge capacity retention rates. On the other hand, referring to Tables 3 and 4, it was found that the anodes of Comparative Examples 1 to 3 showed a decrease in capacity retention rate. Specifically, the anodes of Comparative Examples 1 to 3 showed a rapid decrease in capacity retention rate before reaching 300 cycles in a process of measuring the capacity retention rate at room temperature and the capacity retention rate at a high temperature, and in the rapid charge capacity retention rate measurement, the anode of Comparative Example 2 showed a rapid decrease before reaching 100 cycles, and the anodes of Comparative Examples 1 and 3 showed low capacity retention rates of 71.1% and 70.8%, respectively.

Specifically, all of Comparative Examples 1 to 3 are cases in which the Raman R value of the first conductive material is equal to or less than the Raman R value of the second conductive material, which did not effectively alleviate electrode detachment due to volume expansion of the silicon-based active material in the lower layer, and also, the formation and maintenance of conductive passages in the second anode mixture layer as the upper layer were not sufficiently secured, resulting in low rapid charging characteristics.

The present disclosure may also relate to the following aspects.

Aspect 1) An anode for a lithium secondary battery, comprising:

an anode current collector;
a first anode mixture layer formed on at least one surface of the anode current collector and including a first silicon-based active material doped with a first metal and a first conductive material; and
a second anode mixture layer formed on the first anode mixture layer and including a second silicon-based active material doped with a second metal and a second conductive material,
wherein the first conductive material has a Raman R value according to the following formula 1 that is greater than that of the second conductive material,

$$[\text{Formula 1}]$$
$$\text{Raman R} = I_D/I_G$$

where $I_D$ is a Raman peak intensity value in an absorption region of 1330 to 1380 cm$^{-1}$, and $I_G$ is a Raman peak intensity value in an absorption region of 1550 to 1625 cm$^{-1}$.

Aspect 2) The anode for a lithium secondary battery of aspect 1, wherein each of the first and second metals is independently at least one metal selected from lithium (Li), magnesium (Mg), calcium (Ca), iron (Fe), titanium (Ti), vanadium (V), and aluminum (Al).

Aspect 3) The anode for a lithium secondary battery of aspect 1 or 2, wherein a content of the first metal doped into the first silicon-based active material based on a total weight of the first silicon-based active material is less than a content of the second metal doped into the second silicon-based active material based on a total weight of the second silicon-based active material.

Aspect 4) The anode for a lithium secondary battery of any one of aspects 1 to 3, wherein the content of the first metal doped into the first silicon-based active material is 1 to 5 wt% based on the total weight of the first silicon-based active material, and
wherein the content of the second metal doped into the second silicon-based active material is 7 to 15 wt% based on the total weight of the second silicon-based active material.

Aspect 5) The anode for a lithium secondary battery of any one of aspects 1 to 4, wherein a content of the first metal doped into the first silicon-based active material based on a total weight of the first anode mixture layer is less than a content of the second metal doped into the second silicon-based active material based on a total weight of the second anode mixture layer.

Aspect 6) The anode for a lithium secondary battery of any one of aspects 1 to 5, wherein the content of the first metal doped into the first silicon-based active material is 0.04 to 0.5 wt% based on the total weight of the first anode mixture layer, and

wherein the content of the second metal doped into the second silicon-based active material is 1 to 3 wt% based on the total weight of the second anode mixture layer.

Aspect 7) The anode for a lithium secondary battery of any one of aspects 1 to 6, wherein a content of the first silicon-based active material in the first anode mixture layer is less than a content of the second silicon-based active material in the second anode mixture layer.

Aspect 8) The anode for a lithium secondary battery of any one of aspects 1 to 7, wherein the content of the first silicon-based active material in the first anode mixture layer is 0.1 to 5 wt%, and

wherein the content of the second silicon-based active material in the second anode mixture layer is 6 to 30 wt%.

Aspect 9) The anode for a lithium secondary battery of any one of aspects 1 to 8, wherein the Raman R value of the first conductive material is 0.11 to 1.5, and

wherein the Raman R value of the second conductive material is 0.001 to 0.1.

Aspect 10) The anode for a lithium secondary battery of any one of aspects 1 to 9, wherein the first conductive material includes one selected from a graphite-based conductive material, multi-walled carbon nanotubes (MWCNT), and combinations thereof.

Aspect 11) The anode for a lithium secondary battery of any one of aspects 1 to 10, wherein the second conductive material includes one selected from single-walled carbon nanotubes (SWCNT), thin-walled carbon nanotubes (TWCNT), and combinations thereof.

Aspect 12) The anode for a lithium secondary battery of any one of aspects 1 to 11, wherein a content of the first conductive material in the first anode mixture layer is greater than a content of the second conductive material in the second anode mixture layer.

Aspect 13) An anode for a lithium secondary battery, comprising:

an anode current collector;

a first anode mixture layer formed on at least one surface of the anode current collector and including a first silicon-based active material doped with a first metal and a first conductive agent; and

a second anode mixture layer formed on the first anode mixture layer and including a second silicon-based active material doped with a second metal and a second conductive agent,

wherein a Raman spectrum obtained from a surface of the second anode mixture layer exhibits a Radial Breathing Mode (RBM) peak.

Aspect 14) The anode for a lithium secondary battery of aspect 13, wherein the Raman spectrum obtained from the surface of the second anode mixture layer exhibits G-band splitting.

Aspect 15) A lithium secondary battery comprising the anode according to any one of aspects 1 to 14.

## Claims

1. An anode for a lithium secondary battery, comprising:

an anode current collector;

a first anode mixture layer formed on at least one surface of the anode current collector and including a first silicon-based active material doped with a first metal and a first conductive material; and

a second anode mixture layer formed on the first anode mixture layer and including a second silicon-based active material doped with a second metal and a second conductive material,

wherein the first conductive material has a Raman R value according to the following formula 1 that is greater than that of the second conductive material,

$$[\text{Formula 1}]$$

$$\text{Raman R} = I_D/I_G$$

where $I_D$ is a Raman peak intensity value in an absorption region of 1330 to 1380 cm$^{-1}$, and $I_G$ is a Raman peak intensity value in an absorption region of 1550 to 1625 cm$^{-1}$.

2. The anode for a lithium secondary battery of claim 1, wherein each of the first and second metals is independently at least one metal selected from lithium (Li), magnesium (Mg), calcium (Ca), iron (Fe), titanium (Ti), vanadium (V), and aluminum (Al).

3. The anode for a lithium secondary battery of claim 1 or 2, wherein a content of the first metal doped into the first silicon-based active material based on a total weight of the first silicon-based active material is less than a content of the second metal doped into the second silicon-based active material based on a total weight of the second silicon-based active material.

4. The anode for a lithium secondary battery of any one claim of claims 1 to 3, wherein the content of the first metal doped into the first silicon-based active material is 1 to 5 wt% based on the total weight of the first silicon-based active material, and
wherein the content of the second metal doped into the second silicon-based active material is 7 to 15 wt% based on the total weight of the second silicon-based active material.

5. The anode for a lithium secondary battery of any one claim of claims 1 to 4, wherein a content of the first metal doped into the first silicon-based active material based on a total weight of the first anode mixture layer is less than a content of the second metal doped into the second silicon-based active material based on a total weight of the second anode mixture layer.

6. The anode for a lithium secondary battery of any one claim of claims 1 to 5, wherein the content of the first metal doped into the first silicon-based active material is 0.04 to 0.5 wt% based on the total weight of the first anode mixture layer, and
wherein the content of the second metal doped into the second silicon-based active material is 1 to 3 wt% based on the total weight of the second anode mixture layer.

7. The anode for a lithium secondary battery of any one claim of claims 1 to 6, wherein a content of the first silicon-based active material in the first anode mixture layer is less than a content of the second silicon-based active material in the second anode mixture layer.

8. The anode for a lithium secondary battery of any one claim of claims 1 to 7, wherein the content of the first silicon-based active material in the first anode mixture layer is 0.1 to 5 wt%, and
wherein the content of the second silicon-based active material in the second anode mixture layer is 6 to 30 wt%.

9. The anode for a lithium secondary battery of any one claim of claims 1 to 8, wherein the Raman R value of the first conductive material is 0.11 to 1.5, and
wherein the Raman R value of the second conductive material is 0.001 to 0.1.

10. The anode for a lithium secondary battery of any one claim of claims 1 to 9, wherein the first conductive material includes one selected from a graphite-based conductive material, multi-walled carbon nanotubes (MWCNT), and combinations thereof.

11. The anode for a lithium secondary battery of any one claim of claims 1 to 10, wherein the second conductive material includes one selected from single-walled carbon nanotubes (SWCNT), thin-walled carbon nanotubes (TWCNT), and combinations thereof.

12. The anode for a lithium secondary battery of any one claim of claims 1 to 11, wherein a content of the first conductive material in the first anode mixture layer is greater than a content of the second conductive material in the second anode mixture layer.

13. An anode for a lithium secondary battery, comprising:

an anode current collector;
a first anode mixture layer formed on at least one surface of the anode current collector and including a first silicon-based active material doped with a first metal and a first conductive agent; and
a second anode mixture layer formed on the first anode mixture layer and including a second silicon-based active material doped with a second metal and a second conductive agent,
wherein a Raman spectrum obtained from a surface of the second anode mixture layer exhibits a Radial Breathing Mode (RBM) peak.

14. The anode for a lithium secondary battery of claim 13, wherein the Raman spectrum obtained from the surface of the second anode mixture layer exhibits G-band splitting.

**15.** A lithium secondary battery comprising the anode according to any one claim of claims 1 to 14.

100

22 }20
21

10

FIG. 1

EP 4 679 521 A1

FIG. 2A

FIG. 2B

FIG. 3

EP 4 679 521 A1

FIG. 4A

FIG. 4B

FIG. 4C

Europäisches
Patentamt

European
Patent Office

Office européen
des brevets

# EUROPEAN SEARCH REPORT

**Application Number**

EP 25 17 9597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 064 383 A1 (SK INNOVATION CO LTD [KR]) 28 September 2022 (2022-09-28) * claims 1-14 * | 1-15 | INV. H01M4/134 H01M4/36 H01M4/38 H01M4/62 |
| X | EP 4 329 000 A1 (SK ON CO LTD [KR]) 28 February 2024 (2024-02-28) * claims 1-15 * * paragraphs [0060] - [0069] * | 1-15 | ADD. H01M4/02 |
| X | EP 4 283 709 A1 (SK ON CO LTD [KR]) 29 November 2023 (2023-11-29) * claims 1-15 * * paragraphs [0044], [0073], [0084], [0085] * | 1-15 | |
| X,P | EP 4 418 347 A1 (SK ON CO LTD [KR]; SK INNOVATION CO LTD [KR]) 21 August 2024 (2024-08-21) * claims 1-14 * | 13-15 | |

**TECHNICAL FIELDS SEARCHED (IPC)**

H01M

The present search report has been drawn up for all claims

| Place of search | Date of completion of the search | Examiner |
|---|---|---|
| Munich | 26 November 2025 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 4 679 521 A1

## ANNEX TO THE EUROPEAN SEARCH REPORT
## ON EUROPEAN PATENT APPLICATION NO.

EP 25 17 9597

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2025

| Patent document cited in search report | | | Publication date | Patent family member(s) | | Publication date |
|---|---|---|---|---|---|---|
| EP 4064383 | A1 | | 28-09-2022 | CN | 115132969 A | 30-09-2022 |
| | | | | CN | 117334839 A | 02-01-2024 |
| | | | | EP | 4064383 A1 | 28-09-2022 |
| | | | | EP | 4220752 A2 | 02-08-2023 |
| | | | | KR | 20220133624 A | 05-10-2022 |
| | | | | KR | 20230127948 A | 01-09-2023 |
| | | | | KR | 20250132428 A | 04-09-2025 |
| | | | | US | 2022310991 A1 | 29-09-2022 |
| | | | | US | 2024405208 A1 | 05-12-2024 |
| EP 4329000 | A1 | | 28-02-2024 | CN | 117594747 A | 23-02-2024 |
| | | | | EP | 4329000 A1 | 28-02-2024 |
| | | | | KR | 20240024478 A | 26-02-2024 |
| | | | | US | 2024063373 A1 | 22-02-2024 |
| EP 4283709 | A1 | | 29-11-2023 | CN | 117096269 A | 21-11-2023 |
| | | | | EP | 4283709 A1 | 29-11-2023 |
| | | | | KR | 20230161118 A | 27-11-2023 |
| | | | | US | 2023378446 A1 | 23-11-2023 |
| EP 4418347 | A1 | | 21-08-2024 | CN | 118486783 A | 13-08-2024 |
| | | | | EP | 4418347 A1 | 21-08-2024 |
| | | | | KR | 20240125224 A | 19-08-2024 |
| | | | | US | 2024274827 A1 | 15-08-2024 |

EPO FORM P0459

For more details about this annex : see Official Journal of the European Patent Office, No. 12/82